# EUROPEAN PATENT APPLICATION

(11) **EP 4 261 951 A1**
(43) Date of publication of application: **18.10.2023**
(21) Application number: 23156784.3
(22) Date of filing: 15.02.2023
(51) Int. Cl.: H01M 4/505, H01M 4/525, C01G 53/00, H01M 10/0525, H01M 10/0587, H01M 4/02

(54) **POSITIVE ELECTRODE ACTIVE MATERIAL, POSITIVE ELECTRODE, AND LITHIUM-ION BATTERY**

(30) Priority: 10.03.2022 JP 2022036834
(71) Applicant: Prime Planet Energy & Solutions, Inc., Chuo-ku Tokyo 103-0022 (JP)
(72) Inventor: TAKAHASHI, Keiichi, Tokyo, 103-0022 (JP); HANAZAKI, Ryo, Tokyo, 103-0022 (JP)
(74) Representative: Kuhnen & Wacker Patent- und Rechtsanwaltsbüro PartG mbB

(57) **Abstract**

The present disclosure relates to a positive electrode active material comprising a first particle group and a second particle group, wherein the first particle group consists of a plurality of first particles (14), each first particle (14) includes one to ten single particles, the second particle group consists of a plurality of second particles (15), each second particle (15) includes an aggregation-based particle (10), and each aggregation-based particle (10) is formed of 50 or more primary particles (11) aggregated to each other.

## Description

This nonprovisional application is based on Japanese Patent Application No. 2022-036834 filed on March 10, 2022, with the Japan Patent Office, the entire contents of which are hereby incorporated by reference.

### BACKGROUND OF THE INVENTION

### Field of the Invention

The present disclosure relates to a positive electrode active material, and it also relates to a positive electrode and a lithium-ion battery.

### Description of the Background Art

Japanese Patent Laying-Open No. 2020-087879 suggests the use of a mixed active material, the packing density of which has been enhanced by containing single particles blended with aggregation-based particles surface-coated with lithium tungstate and/or lithium borate, and thereby achieving a bimodal circularity distribution of the active material (a distribution with two peaks).

### SUMMARY OF THE INVENTION

A positive electrode plate that includes a positive electrode active material comprising aggregation-based particles with pores is excellent in cycling performance, but it can experience breakage of the particles when the packing density is 3.7 g/cm³ or more, potentially resulting in a decrease of post-cycle capacity retention. Even when the aggregation-based particles with pores are blended with single particles, the possible upper limit to the packing density is as low as 3.65 g/cm³ and thereby a desired energy density may not be attained. Moreover, as for the aggregation-based particles recited by Japanese Patent Laying-Open No. 2020-087879, crystal growth caused by re-heating may destroy the pores.

An object of the present disclosure is to provide a positive electrode active material having a high packing density (of 3.7 g/cm³ or more, for example) capable of giving a lithium-ion battery excellent in cycling performance.

The present disclosure provides a positive electrode active material, a positive electrode, and a lithium-ion battery described below.
[1] A positive electrode active material comprising a first particle group and a second particle group, wherein
   the first particle group consists of a plurality of first particles,
   each first particle includes one to ten single particles,
   the single particle has a first maximum diameter of 0.5 µm or more,
   the first maximum diameter refers to a distance between two points located farthest apart from each other on an outline of the single particle,
   the second particle group consists of a plurality of second particles,
   each second particle includes an aggregation-based particle,
   each aggregation-based particle is formed of 50 or more primary particles aggregated to each other,
   the primary particle has a second maximum diameter less than 0.5 µm,
   the second maximum diameter refers to a distance between two points located farthest apart from each other on an outline of the primary particle,
   the single particle has a ratio of nickel to metallic elements except lithium of 70 mol % or more,
   the primary particle has a ratio of nickel to metallic elements except lithium of 75 mol % or more,
   the aggregation-based particle includes, inside thereof, a lithium-containing metal oxide at interfaces of the primary particles,
   the aggregation-based particle has a porosity from 2% to 8%, and
   a mass ratio of the first particle group to the second particle group is from 20:80 to 50:50.
[2] The positive electrode active material according to [1], wherein each of the single particle and the primary particle includes a compound containing nickel, cobalt, and manganese.
[3] The positive electrode active material according to [1] or [2], wherein the aggregation-based particle has a strength at break of 150 MPa or more.
[4] The positive electrode active material according to any one of [1] to [3], wherein the lithium-containing metal oxide is at least one selected from the group consisting of lithium tungstate, lithium zirconate, lithium titanium oxide, lithium aluminate, and lithium borate.
[5] A positive electrode comprising a positive electrode active material layer and a base material, wherein the positive electrode active material layer includes the positive electrode active material according to any one of [1] to [4].
[6] A lithium-ion battery comprising the positive electrode according to [5].

The foregoing and other objects, features, aspects and advantages of this disclosure will become more apparent from the following detailed description of this disclosure when taken in conjunction with the accompanying drawings.

### BRIEF DESCRIPTION OF THE DRAWINGS

Fig. 1 is a conceptual view of an aggregation-based particle according to the present embodiment.
Fig. 2 is a schematic view of an example of a lithium-ion battery according to the present embodiment.
Fig. 3 is a schematic view of an example of an electrode assembly according to the present embodiment.
Fig. 4 is a conceptual view of a positive electrode according to the present embodiment.
Fig. 5 is a schematic view of an aggregation-based particle when the porosity is 0%.

### DESCRIPTION OF THE PREFERRED EMBODIMENTS

In the following, an embodiment of the present disclosure (hereinafter also called "the present embodiment") will be described. It should be noted that the below description does not limit the scope of claims.

### <Positive Electrode Active Material>

A positive electrode active material comprises a first particle group and a second particle group. The positive electrode active material may consist essentially of a first particle group and a second particle group. The positive electrode active material may consist of a first particle group and a second particle group. The first particle group is a group of first particles. The second particle group is a group of second particles. The first particle has a different particle structure from that of the second particle. The positive electrode active material according to the present embodiment may be for a lithium-ion battery. The details of a lithium-ion battery will be described below.

The first particle group consists of a plurality of first particles. The first particles may have any shape. The first particles may be spherical, columnar, in lumps, and/or the like, for example. Each first particle includes one to ten single particles. The single particle is a primary particle that has grown into a relatively large size. The single particle may form a first particle by itself. Two to ten single particles may aggregate to each other to form a first particle.

The "single particle" according to the present embodiment refers to a particle whose grain boundary cannot be visually identified in a scanning electron microscope (SEM) image of the particle, and this particle has a first maximum diameter of 0.5 µm or more. The first maximum diameter refers to a distance between two points located farthest apart from each other on an outline of the single particle. In the present embodiment, "the outline of a particle" may be identified in a two-dimensional projected image of the particle, or may be identified in a cross-sectional image of the particle. For example, the outline of the particle may be identified in an SEM image of powder, or may be identified in a cross-sectional SEM image of the particle.

The single particle may have a first maximum diameter of 0.5 µm or more, preferably a first maximum diameter from 1 µm to 7 µm, more preferably a first maximum diameter from 2 µm to 5 µm.

The second particle group consists of a plurality of second particles. The second particles may have any shape. The second particles may be spherical, columnar, in lumps, and/or the like, for example. Each second particle includes an aggregation-based particle. For example, each second particle may consist essentially of an aggregation-based particle. For example, each second particle may consist of an aggregation-based particle. Each aggregation-based particle is formed of 50 or more primary particles aggregated to each other.

For example, each aggregation-based particle may be formed of 100 or more primary particles aggregated to each other. There is no upper limit to the number of primary particles in each aggregation-based particle. For example, each aggregation-based particle may be formed of 10000 or less primary particles aggregated to each other. For example, each aggregation-based particle may be formed of 1000 or less primary particles aggregated to each other. The aggregation-based particle may have any shape. The aggregation-based particle may be spherical, columnar, in lumps, and/or the like, for example.

The primary particle refers to a particle whose grain boundary cannot be visually identified in an SEM image of the particle, and this particle has a second maximum diameter less than 0.5 µm. The second maximum diameter refers to a distance between two points located farthest apart from each other on an outline of the primary particle. The primary particle has a second maximum diameter from 0.05 µm to 0.5 µm, preferably a second maximum diameter from 0.05 µm to 0.3 µm. When each of 10 or more primary particles randomly selected from an SEM image of a single aggregation-based particle has a second maximum diameter from 0.05 µm to 0.3 µm, it may be regarded that each of all the primary particles included in this aggregation-based particle has a second maximum diameter from 0.05 µm to 0.3 µm. The primary particle may have a second maximum diameter from 0.1 µm to 0.3 µm, for example.

Herein, the number of single particles included in a first particle and the number of primary particles included in an aggregation-based particle are measured in an SEM image of the first particle and the aggregation-based particle, respectively. The magnification of the SEM image is adjusted as appropriate depending on the size of the particle. The magnification of the SEM image may be from 10000 times to 30000 times, for example.

The first particle (single particles) and the second particle (primary particles) contain nickel. The ratio of nickel to metallic elements except lithium in the first particle (single particles) and the second particle (primary particles) is 70 mol % or more and 75 mol % or more, respectively, preferably 70 mol % or more and 75 mol % or more, respectively. One of the first particle (single particles) and the second particle (primary particles) or both of them may include a compound containing nickel, cobalt, and manganese, for example, preferably includes a nickel-cobalt-manganese composite hydroxide, more preferably a lithium-nickel-cobalt-manganese composite oxide. For example, the nickel-cobalt-manganese composite hydroxide may be obtained by coprecipitation and/or the like. For example, the nickel-cobalt-manganese composite hydroxide may be a compound represented by the following general formula: NiₓCo_{y}Mn_{z}(OH)₂ (where x+y+z=1). In the lithium-nickel-cobalt-manganese composite oxide, the molar ratio between lithium and a combination of nickel, cobalt, and manganese may be from 1.0 to 1.2:1.0, for example.

The single particle may include a first layered metal oxide, for example.

The first layered metal oxide is represented by the following formula (1):

Li₁₋ₐ₁Niₓ₁Me¹₁₋ₓ₁O₂ (1)

where
"a1" satisfies a relationship of "-0.3≤a1≤0.3",
"x1" satisfies a relationship of 0.7≤x1<1.0, and
"Me¹" is at least one selected from the group consisting of Co, Mn, Al, Zr, Ti, V, Cr, Fe, Cu, Zn, Mo, Sn, Ge, Nb, and W.

The primary particle may include a second layered metal oxide, for example.

The second layered metal oxide is represented by the following formula (2):

Li₁₋ₐ₂Niₓ₂Me²₁₋ₓ₂O₂ (2)

where
"a2" satisfies a relationship of "-0.3≤a2≤0.3",
"x2" satisfies a relationship of 0.75≤x2≤1.0, and
"Me²" is at least one selected from the group consisting of Co, Mn, Al, Zr, Ti, V, Cr, Fe, Cu, Zn, Mo, Sn, Ge, Nb, and W.

In the formulae (1) and (2), the relationship "x1<x2" may be satisfied, for example.

For example, the single particle may include at least one selected from the group consisting of LiNi_{0.8}Co_{0.1}Mn_{0.1}O₂, LiNi_{0.7}Co_{0.2}Mn_{0.1}O₂, and LiNi_{0.7}Co_{0.1}Mn_{0.2}O₂. For example, the primary particle may include LiNi_{0.8}Co_{0.1}Mn_{0.1}O₂.

For example, both the single particle and the primary particle may consist essentially of LiNi_{0.8}Co_{0.1}Mn_{0.1}O₂.

The aggregation-based particle includes, inside thereof, a lithium-containing metal oxide at interfaces of the primary particles. When the aggregation-based particle includes, inside thereof, a lithium-containing metal oxide at interfaces of the primary particles, the endurance of the battery tends to be enhanced. The lithium-containing metal oxide is, for example, at least one selected from the group consisting of lithium tungstate, lithium zirconate, lithium titanium oxide, lithium aluminate, and lithium borate. Among these, lithium borate is preferable.

As for the aggregation-based particle, the entire surface thereof may be covered with the lithium-containing metal oxide, or the surface of the second particle (primary particles) may be covered with the lithium-containing metal oxide. Moreover, the surface of the first particle (single particles) may be covered with the lithium-containing metal oxide.

The aggregation-based particle has a porosity from 2% to 8%. When the aggregation-based particle has a porosity within the above range, the lithium-containing metal oxide is likely to be included at interfaces of the primary particles and a decrease in the particle strength at break tends to be inhibited. The porosity of the aggregation-based particle is preferably from 2% to 6%. The particle strength at break of the aggregation-based particle may be 149 MPa or more, for example, preferably from 150 MPa to 154 MPa. Each of the porosity and the particle strength at break of the aggregation-based particle is determined by a method described in the Examples section below.

The aggregation-based particle may be obtained by, for example, a method that involves mixing a lithium source such as lithium hydroxide and a nickel-cobalt-manganese composite hydroxide, calcining the mixture to obtain a lithium-nickel-cobalt-manganese composite oxide having an aggregated structure, and adding thereto a metal oxide, followed by heat treatment. The porosity can be adjusted into the above range by adjusting the calcination temperature and/or the heat treatment temperature. The first particle (single particles) may be obtained by, for example, dry grinding the above lithium-nickel-cobalt-manganese composite oxide having an aggregated structure with the use of a jet mill and/or the like to dry it.

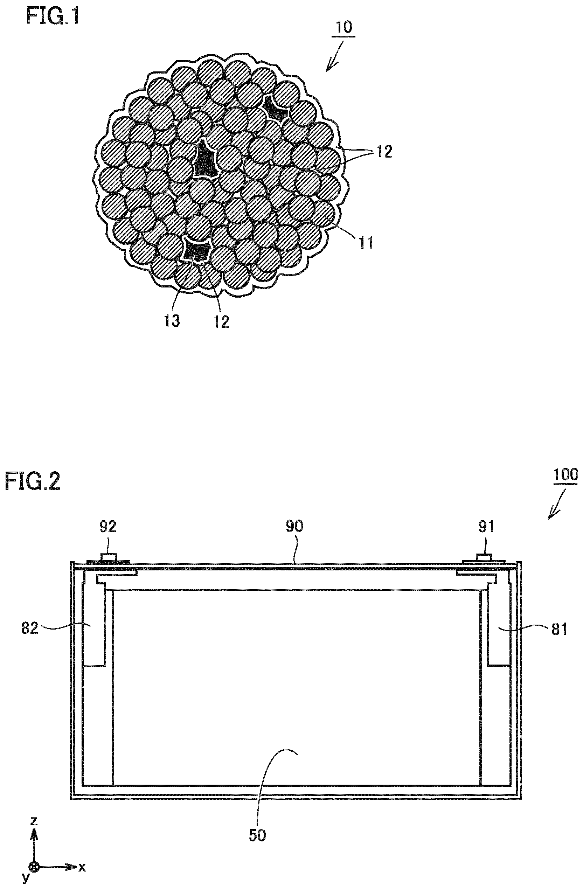

Fig. 1 is a schematic cross-sectional view of the aggregation-based particle. An aggregation-based particle 10 shown in Fig. 1 consists of a plurality of primary particles 11. Aggregation-based particle 10 is covered with a lithium-containing metal oxide 12. Aggregation-based particle 10 has a pore 13 inside thereof. Aggregation-based particle 10 includes, inside thereof, lithium-containing metal oxide 12 at interfaces of primary particles 11.

The mass ratio of the first particle group to the second particle group is from 20:80 to 50:50. When the mass ratio of the first particle group to the second particle group is within the above range, the endurance of the battery tends to be enhanced. The mass ratio of the first particle group to the second particle group is preferably from 20:80 to 30:70.

### <Lithium-Ion Battery>

Fig. 2 is a schematic view of an example of a lithium-ion battery according to the present embodiment. A battery 100 shown in Fig. 2 is a lithium-ion battery. Battery 100 may be a vehicle-mounted prismatic lithium-ion battery for use in a main electric power supply or a motive force assisting electric power supply in, for example, an electric vehicle.

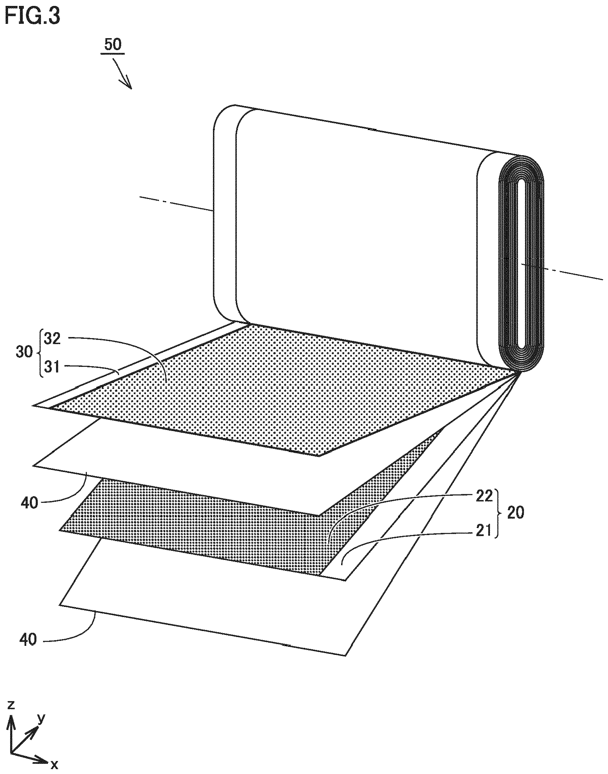

Battery 100 includes an exterior package 90. Exterior package 90 accommodates an electrode assembly 50 and an electrolyte (not illustrated). Electrode assembly 50 is connected to a positive electrode terminal 91 via a positive electrode current-collecting member 81. Electrode assembly 50 is connected to a negative electrode terminal 92 via a negative electrode current-collecting member 82. Fig. 3 is a schematic view of an example of an electrode assembly according to the present embodiment. Electrode assembly 50 is a wound-type one. Electrode assembly 50 includes a positive electrode 20, a separator 40, and a negative electrode 30. That is, battery 100 includes positive electrode 20. Positive electrode 20 includes a positive electrode active material layer 22 and a positive electrode base material 21. Negative electrode 30 includes a negative electrode active material layer 32 and a negative electrode base material 31.

### <Positive Electrode>

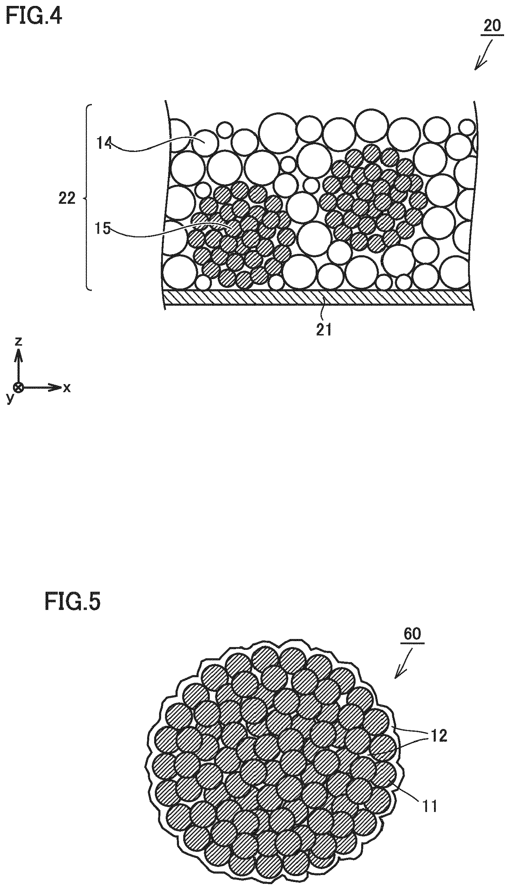

Referring to Fig. 4, in positive electrode 20, positive electrode active material layer 22 may be formed directly on only one side of positive electrode base material 21. Between positive electrode active material layer 22 and positive electrode base material 21, another layer (not illustrated) may be interposed. Positive electrode active material layer 22 may be formed on both sides of positive electrode base material 21. Positive electrode base material 21 may be a conductive sheet consisting of Al alloy foil, pure Al foil, and/or the like, for example.

Positive electrode active material layer 22 includes a positive electrode active material comprising a first particle 14 and a second particle 15. First particle 14 includes a single particle. Second particle 15 includes an aggregation-based particle. Positive electrode active material layer 22 may further include a conductive material (not illustrated), a binder (not illustrated), and/or the like, in addition to the positive electrode active material.

Positive electrode active material layer 22 may have a thickness from 10 µm to 200 µm, for example. Positive electrode active material layer 22 may have a high density. Positive electrode active material layer 22 may have a density of 3.7 g/cm³ or more, or may have a density of 3.8 g/cm³ or more, or may have a density of 3.9 g/cm³ or more, for example. The upper limit to the density is not particularly limited. Positive electrode active material layer 22 may have a density of 4.0 g/cm³ or less, for example.

### [Examples]

In the following, the present disclosure will be described in further detail by way of Examples. "%" and "part(s)" in Examples refer to mass% and part(s) by mass, respectively, unless otherwise specified. The below description does not limit the scope of claims.

### [Porosity]

A porosity Vp was determined as a volume ratio in the following manner: the particle density Dp of positive electrode active material powder was measured based on a constant volume expansion method with the use of AccuPyc II1340 manufactured by Micromeritics Instrument; then the theoretical density D0 was determined from the crystal lattice constant of the same powder; and these results were used to perform calculation by the following expression: Vp = (1-Dp/D0)×100 (%).

### [Particle Strength at Break]

The strength at break of the aggregation-based particle was determined in the following manner: in accordance with JIS Z 8844, with the use of a micro-compression tester MCT-501 manufactured by Shimadzu Corporation, under observation with a microscope, a single aggregation-based particle of a size similar to an average particle size D50 (= 12 µm) was pressed with a plane indenter having a diameter of 50 µm; from the amount of displacement and the testing force, an s-s curve indicating the breaking behavior was measured; and then the average of ten measurements was determined to obtain the particle strength at break at the time of particle crushing.

### [Production of Active Material A1 with Aggregated Structure]

Nickel-cobalt-manganese composite hydroxide with a composition of Ni_{0.8}Co_{0.1}Mn_{0.1}(OH)₂ obtained by coprecipitation was subjected to primary heat treatment in the atmosphere at 450°C for 5 hours into an oxide, and the resultant was cooled and then mixed with lithium hydroxide in a predetermined Li/Me ratio, followed by calcination treatment in an oxygen atmosphere at 770°C for 10 hours to give lithium composite oxide powder having an aggregation-based particle structure (active material A1). The resulting active material A1 did not have pores inside it, having a porosity of 0%. Fig. 5 is a schematic view of an aggregation-based particle when the porosity is 0%.

### [Production of Active Material A2 with Aggregated Structure]

The lithium composite oxide powder having an aggregation-based particle structure (active material A1) was mixed with 1 at% boric acid, followed by heat treatment at 200°C for 3 hours to give an active material A2 covered with lithium borate.

### [Production of Active Material A3 with Aggregated Structure]

Nickel-cobalt-manganese composite hydroxide with a composition of Ni_{0.8}Co_{0.1}Mn_{0.1}(OH)₂ obtained by coprecipitation was subjected to primary heat treatment in the atmosphere at 450°C for 1 hour into an oxide, and the resultant was cooled and then mixed with lithium hydroxide in a predetermined Li/Me ratio, followed by calcination treatment in an oxygen atmosphere at 750°C for 10 hours to give lithium composite oxide having an aggregation-based particle structure. The resulting powder having a secondary particle structure had a porosity of 5% due to the primary heat treatment.

The active material particle having an aggregation-based particle structure thus obtained was mixed with 1 at% boric acid, followed by heat treatment at 300°C for 3 hours to give an active material A3 covered with lithium borate.

### [Production of Active Materials A4 to A6 with Aggregated Structure]

Lithium composite oxides (A4 to A6) having an aggregation-based particle structure were obtained in the same manner as in the production of active material A3 except that the primary heat treatment of nickel-cobalt-manganese composite hydroxide was carried out at 500°C, 550°C, and 650°C, respectively. Each of the resulting powders having a secondary particle structure had a porosity of 2%, 6%, and 12%, respectively.

### [Production of Active Materials A7, A8 with Aggregated Structure]

By covering the surface of the same aggregation-based particle as in Example 1 with lithium tungstate and lithium aluminate instead of lithium borate, active materials A7 and A8 were produced.

### [Production of Active Material B with Single Particle Structure]

Nickel-cobalt-manganese composite hydroxide with a composition of Ni_{0.8}Co_{0.1}Mn_{0.1}(OH)₂ obtained by coprecipitation was calcined at 500°C to give nickel-cobalt-manganese composite oxide (Z1).

Then, lithium hydroxide and the nickel-cobalt-manganese composite oxide (Z1) were mixed together so that the molar ratio of Li to the total amount of Ni, Co, and Mn became 1.05:1, and the resulting mixture was calcined in an oxygen atmosphere at 850°C for 72 hours, wet-ground in a ball mill, and dried to form a single particle structure, followed by another heat treatment in an oxygen atmosphere at 750°C for 10 hours to give a lithium composite oxide (B) with a single particle structure. The particle size distribution of the lithium composite oxide (B) was measured to give a particle size (D50) value of 3.3 µm, and, as a result of SEM examination of the structure, it was found that the composite oxide (B) was particles mostly with a single particle structure and with a particle size from 2.3 to 3.5 µm.

### <Examples 1 to 6 and Comparative Examples 1 to 5>

### [Mixing Single Particle and Aggregation-based Particle]

Active materials A1 to A8 having an aggregated structure and active material B having a single particle structure were uniformly mixed together in a predetermined weight ratio (mixing ratio, 80:20) with the use of a rocking mixer to give positive electrode active materials C1 to C8. Similarly, active material A3 having an aggregated structure and active material B having a single particle structure were mixed in a mixing ratio of 10:90, 50:50, and 60:40 to give positive electrode active materials C9 to C11, respectively.

### [Production of Positive Electrode Plate]

Positive electrode active materials C1 to C11, acetylene black, and polyvinylidene difluoride (PVdF) were mixed in a solid mass ratio of 96.3:2.5:1.2, followed by addition of a proper amount of N-methyl-2-pyrrolidone (NMP) and kneading to give a positive electrode composite material slurry. The resulting positive electrode composite material slurry was applied to both sides of an aluminum foil core No. 1C32 with a thickness of 13 µm, and the resulting coating film was dried, followed by compression with a rolling mill to achieve a composite material density of the coating film of 3.7 g/cm³ (except for Example 5, which had 3.65), and then cutting into a predetermined electrode size to give a positive electrode having a positive electrode composite material layer formed on both sides of the positive electrode core.

### [Production of Small Lithium-Ion Battery]

The positive electrode thus prepared was positioned facing a carbon negative electrode, with a separator being interposed between them, followed by injection of an electrolyte solution of 1.1 M PF6 EC/EMC/DMC (343) + VC 2% to produce a small laminate-type battery. The initial charge-discharge capacity was checked in a thermostatic chamber at 25°C under the conditions of 0.3 C-rate, 4.2 V CVCC charging, 2.5 V cut discharge, and then 1000 cycles of charge and discharge were carried out under the cycle conditions of 0.5 C-rate, 4.2 V CVCC charging, 3.0 V CC discharging, followed by another charge-discharge test at 0.3 C-rate to determine the discharged capacity, which was compared to the initial capacity value to determine the capacity retention. Results are shown in Table 1.

**[Table 1]**

| | Positive electrode active material | Porosity (%) | Coating compound | Particle strength at break (MPa) | Composite material density (g/cm³) | Single particle mixing ratio (%) | Post-1000-cycle capacity retention (%) |
|---|---|---|---|---|---|---|---|
| Comp. Ex. 1 | C1 | 0 | None | 155 | 3.7 | 20 | 88.1 |
| Comp. Ex. 2 | C2 | 0 | Lithium borate | 156 | 3.7 | 20 | 89.8 |
| Ex. 1 | C3 | 5 | Lithium borate | 153 | 3.7 | 20 | 92.5 |
| Ex. 2 | C4 | 2 | Lithium borate | 149 | 3.7 | 20 | 91.7 |
| Ex. 3 | C5 | 6 | Lithium borate | 152 | 3.7 | 20 | 91.4 |
| Comp. Ex. 3 | C6 | 12 | Lithium borate | 148 | 3.65 | 20 | 84.5 |
| Ex. 4 | C7 | 5 | Lithium tungstate | 153 | 3.7 | 20 | 92.3 |
| Ex. 5 | C8 | 5 | Lithium aluminate | 153 | 3.7 | 20 | 92.2 |
| Comp. Ex. 4 | C9 | 5 | Lithium borate | 153 | 3.7 | 10 | 87.4 |
| Ex. 6 | C10 | 5 | Lithium borate | 153 | 3.7 | 50 | 92.1 |
| Comp. Ex. 5 | C11 | 5 | Lithium borate | 153 | 3.7 | 60 | 88.5 |

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

The embodiments and examples disclosed herein are illustrative and non-restrictive in any respect. The technical scope indicated by the claims encompasses any modifications within the scope and meaning equivalent to the terms of the claims.

## Claims

1. A positive electrode active material comprising:
a first particle group; and
a second particle group, wherein
the first particle group consists of a plurality of first particles (14),
each first particle (14) includes one to ten single particles,
the single particle has a first maximum diameter of 0.5 µm or more,
the first maximum diameter refers to a distance between two points located farthest apart from each other on an outline of the single particle,
the second particle group consists of a plurality of second particles (15),
each second particle (15) includes an aggregation-based particle (10),
each aggregation-based particle (10) is formed of 50 or more primary particles (11) aggregated to each other,
the primary particle (11) has a second maximum diameter less than 0.5 µm,
the second maximum diameter refers to a distance between two points located farthest apart from each other on an outline of the primary particle (11),
the single particle has a ratio of nickel to metallic elements except lithium of 70 mol % or more,
the primary particle (11) has a ratio of nickel to metallic elements except lithium of 75 mol % or more,
the aggregation-based particle (10) includes, inside thereof, a lithium-containing metal oxide (12) at interfaces of the primary particles,
the aggregation-based particle (10) has a porosity from 2% to 8%, and
a mass ratio of the first particle group to the second particle group is from 20:80 to 50:50.

2. The positive electrode active material according to claim 1, wherein each of the single particle and the primary particle (11) includes a compound containing nickel, cobalt, and manganese.

3. The positive electrode active material according to claim 1 or 2, wherein the aggregation-based particle (10) has a strength at break of 150 MPa or more.

4. The positive electrode active material according to any one of claims 1 to 3, wherein the lithium-containing metal oxide (12) is at least one selected from the group consisting of lithium tungstate, lithium zirconate, lithium titanium oxide, lithium aluminate, and lithium borate.

5. A positive electrode (20) comprising:
a positive electrode active material layer (22); and
a base material (21), wherein
the positive electrode active material layer (22) includes the positive electrode active material according to any one of claims 1 to 4.

6. A lithium-ion battery comprising the positive electrode (20) according to claim 5.
